# EUROPÄISCHE PATENTSCHRIFT

(11) **EP 2 397 062 B1**
(45) Veröffentlichungstag und Bekanntmachung des Hinweises auf die Patenterteilung: **31.07.2013**
(21) Anmeldenummer: 11005673.6
(22) Anmeldetag: 12.07.2011
(51) Int. Cl.: A47L 15/42, D06F 39/00

(54) **Haushaltsgerät mit Tank zur Lagerung von Prozesswasser und mit Gassensor**
Domestic appliance with tank for storage of process water with gas sensor
Appareil ménager avec réservoir pour le stockage de l'eau de processus et avec un capteur de gaz

(43) Veröffentlichungstag der Anmeldung: 21.12.2011
(73) Patentinhaber: V-Zug AG, 6301 Zug (CH)
(72) Erfinder: Gau, Ingo, 6317 Oberwil (CH); Köppel, Michael, 6036 Dierikon (CH)
(74) Vertreter: Sutter, Kurt

(56) Entgegenhaltungen:
- EP-A1- 0 911 439
- EP-A1- 1 598 468
- EP-A2- 0 691 099
- DE-A1-102008 029 908
- GB-A- 2 416 779

## Beschreibung

### Gebiet der Erfindung

Die Erfindung betrifft ein Haushaltsgerät, insbesondere einen Geschirrspüler oder eine Waschmaschine. Das Haushaltsgerät besitzt einen Bottich zur Reinigung eines zu reinigenden Guts, einen Tank zum Zwischenspeichern von aus dem Bottich abgelassenem Prozesswasser sowie eine Steuerung. Die Steuerung ist dazu ausgestaltet, Prozesswasser vom Bottich in den Tank zu fördern und in einem späteren Reinigungsgang mit neuem zu reinigendem Gut das Prozesswasser vom Tank wieder zurück zum Bottich zu fördern.

### Hintergrund

WO 2005/051157 beschreibt einen Geschirrspüler mit einem Tank, um einen Teil des Prozesswassers zwischen zwei Waschgängen zu speichern. Zur Reinigung des Wassers im Tank ist eine biologische Wasseraufbereitungsvorrichtung vorgesehen. Um die dabei wirkenden Mikroorganismen wieder unwirksam zu machen, wird weiter vorgeschlagen, das Prozesswasser mit UV-Licht, Ozon oder dergleichen zu behandeln.

EP 909 848 beschreibt eine Waschmaschine, welche ebenfalls mit einem Tank zur Zwischenspeicherung von Prozesswasser zwischen zwei Waschgängen ausgestattet ist.

Ein Haushaltsgerät gemäß dem Oberbegriff des Anspruchs 1 ist aus DE-A-10 2008 029908 schon bekannt.

Das Wasser im Tank solcher Geräte ist mit Verunreinigungen belastet. Bei längerer Lagerzeit kommt es zu einem unkontrollierten Keimwachstum, sei es aufgrund kontrolliert zugeführter Reinigungsbakterien, oder aufgrund von anderen, zufällig eingeschleppten Keimen. Dadurch wird die Wasserqualität beeinträchtigt. Deshalb ist die zulässige Lagerzeit des Wassers schwer abzuschätzen.

### Darstellung der Erfindung

Es stellt sich die Aufgabe, ein Haushaltsgerät der eingangs beschriebenen Art bereitzustellen, bei welchem das Prozesswasser im Tank in verlässlicher Weise relativ lange gelagert werden kann.

Diese Aufgabe wird vom Gerät gemäss Anspruch 1 gelöst. Dementsprechend ist das Gerät also mit einem Gassensor zum Detektieren von aus dem im Tank gelagerten Prozesswasser austretenden Gasen ausgestattet. Dieser Gassensor erlaubt es, aus dem Wasser austretende Gase zu detektieren, die auf einen Bakterienstoffwechsel hinweisen. Auf diese Weise können Informationen über den Zustand des gelagerten Prozesswassers gewonnen werden.

Vorzugsweise sollte mit dem Gassensor mindestens eines der folgenden Gase detektierbar sein:
- Ammoniak
- mindestens ein organisches Gas, insbesondere Methan,
- Schwefelwasserstoff.

Derartige Gase sind typische Abbauprodukte des anaeroben Bakterienstoffwechsels.

In einer weiteren bevorzugten Ausführung weist das Haushaltgerät eine Wasserbehandlungsvorrichtung zum Abbau von Keimen im Prozesswasser im Tank auf, und die Steuerung des Geräts ist dazu ausgestaltet, die Wasserbehandlungsvorrichtung abhängig vom Signal des Gassensors anzusteuern. Dies erlaubt eine bedarfsweise Aktivierung der Behandlungsvorrichtung, so dass das Wasser nur dann behandelt wird, wenn es notwendig oder sinnvoll ist.

Weiter kann die Steuerung des Geräts dazu ausgestaltet sein, das Prozesswasser im Tank abhängig vom Signal des Gassensors zu verwerfen. Auf diese Weise kann der Tank entleert werden, wenn das Wasser eine sehr hohe Verschmutzung aufweist.

Vorzugsweise ist das Haushaltsgerät ein Geschirrspüler oder eine Waschmaschine.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Blockdiagramm einer ersten Ausführung eines Haushaltsgeräts,
Fig. 2 ein Blockdiagramm einer zweiten Ausführung eines Haushaltsgeräts und
Fig. 3 das Signal eines Gassensors (beliebige Einheiten) als Funktion der Zeit (Stunden).

### Wege zur Ausführung der Erfindung

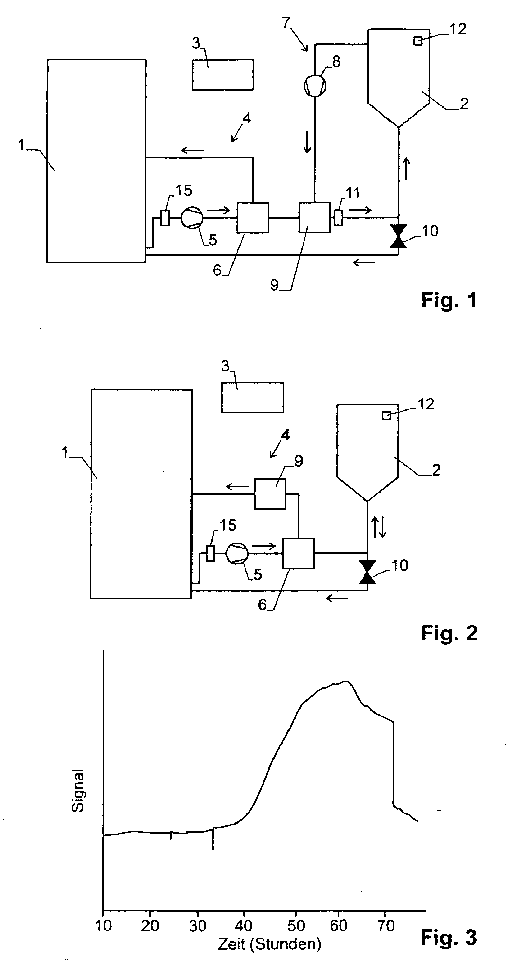

In Fig. 1 wird schematisch ein Haushaltgerät mit einem Bottich 1 zur Reinigung eines zu reinigenden Guts dargestellt. Dabei kann es sich z.B. um den Bottich einer Waschmaschine oder eines Geschirrspülers handeln, in welchem die Wäsche bzw. das Geschirr während der Reinigung angeordnet wird. Das Gerät ist dazu ausgestaltet, das zu reinigende Gut in einem Reinigungsgang zu reinigen. Typisch weist ein derartiger Reinigungsgang mehrere Phasen auf, so z.B. eine Hauptwaschphase, in welcher unter Einsatz chemischer Waschreagenzien der grösste Teil des Schmutzes aus dem Gut entfernt wird, sowie mindestens eine Spülphase(bei Geschirrspülern oft als Klarspülphase bezeichnet), in welcher das in der Hauptwaschphase bereits im Wesentlichen gereinigte Gut noch nachgespült wird. Zwischen diesen Phasen wird das Prozesswasser zumindest zu einem überwiegenden Teil ausgewechselt.

Das Gerät ist nun in an sich bekannter Weise mit einem Tank 2 ausgestattet, um Prozesswasser aus einem Reinigungsgang zu lagern und in einem späteren Reinigungsgang wieder zum Bottich zurückzuführen, um auf diese Weise den Wasserverbrauch des Geräts zu reduzieren. Vorzugsweise, nicht aber notwendigerweise, wird dabei das Prozesswasser am Schluss der Spülphase in den Tank 2 übergeführt, da dieses Wasser eine relativ geringe Verschmutzung aufweist und sich deshalb besonders gut zur Lagerung und Wiederverwendung eignet. Das Prozesswasser vom Tank 2 wird dann in einem späteren Waschgang, insbesondere dem nächsten Waschgang, zurück zum Bottich 1 geführt. Das zurückgeführte Prozesswasser wird dabei vorzugsweise für die Hauptwaschphase oder eine der Hauptwaschphase voran gestellte Vorspülphase eingesetzt.

Die hierzu nötigen Abläufe werden von einer Steuerung 3 des Geräts gesteuert. Die Steuerung 3 umfasst z.B. einen Mikroprozessor mit Steuerprogramm, der die genannten Schritte automatisch durchführt. Denkbar ist jedoch auch die Ausgestaltung der Steuerung in rein mechanischer Weise. Die Steuerung 3 ist mit den Aktoren und Detektoren des Geräts verbunden, sowie auch mit einer nicht dargestellten Bedien- und Anzeigeeinheit. Wenn im Folgenden davon gesprochen wird, dass die Steuerung oder das Gerät zur Durchführung gewisser Schritte ausgestaltet ist, soll dies so zu verstehen sein, dass die Steuerung derart programmiert oder mechanisch ausgestaltet und mit dem Komponenten des Geräts verbunden ist, dass sie diese Schritte ausführt.

Wie aus Fig. 1 ersichtlich, ist am Bottich 1 eine Bottich-Zirkulationsleitung 4 vorgesehen, mit welcher Prozesswasser vom Bottich 1 über eine Bottich-Zirkulationspumpe 5 und eine Wasserweiche 6 geführt werden kann. Je nach Einstellung der Wasserweiche 6 kann das Prozesswasser von der Bottich-Zirkulationspumpe 5 wahlweise zurück zum Bottich 1 oder zum Tank 2 gefördert werden. (Alternativ hierzu kann eine separate Pumpe vorgesehen sein, um das Wasser vom Bottich 1 in den Tank 2 zu leiten, z.B. vor dem weiter unten beschriebenen Ventil 10.) In der Zirkulationsleitung 4 ist weiter ein Trübungs- bzw. Verschmutzungssensor 15 vorgesehen, mit welchem der Verschmutzungszustand des Prozesswassers detektiert werden kann.

Wie weiter aus Fig. 1 ersichtlich, ist am Tank 2 eine Tank-Zirkulationsleitung 7 vorgesehen, mit welcher Prozesswasser vom Tank 2 über eine Tank-Zirkulationspumpe 8 und eine Wasserbehandlungsvorrichtung 9 wieder zurück in den Tank 2 geführt werden kann.

In der Ausführung nach Fig. 1 fliesst das vom Bottich 1 über die die Tank-Zirkulationspumpe 5 und die Wasserweiche 6 kommende Prozesswasser durch die Wasserbehandlungsvorrichtung 9, bevor es zum Tank 2 gelangt, so dass es auf seinem Weg zum Tank 2 bereits behandelt werden kann.

Weiter umfasst das Gerät gemäss Fig. 1 ein Ventil 10, welches den Abfluss des Tanks 2 mit dem Bottich 1 verbindet. Wird dieses Ventil 10 geöffnet, so fliesst das Wasser vom Tank 2 aufgrund seiner Schwerkraft in den Bottich 1.

Die Wasseraufbereitungsvorrichtung 9 umfasst eine Elektrolysezelle mit zwei Elektroden, von denen mindestens die Eine von einer Diamantelektrode gebildet wird. Unter Diamantelektrode ist dabei eine Elektrode zu verstehen, deren Oberfläche von durch Dotierung leitfähig gemachtem Diamant gebildet wird. Vorzugsweise ist der Diamant mit Bor dotiert, aber es kommen auch andere Dotierungsmaterialien in Frage. Derartige Elektroden werden z.B. hergestellt, indem bei 2500°C aus den Gasen Methan und Wasserstoff eine dünne, nur wenige Tausendstel Millimeter dicke kristalline Diamantschicht auf ein leitfähiges Trägermaterial (z.B. Titan) abgelagert wird. Die Dotierung kann nachträglich oder während der Gasphasenablagerung erfolgen.

Zumindest die Anode sollte von einer Diamantelektrode gebildet sein, so dass die Erzeugung von Wasserstoff unterdrückt wird. Die Kathode kann ebenfalls von einer Diamantelektrode gebildet werden, denkbar sind aber auch andere Elektrodenmaterialien, wie z.B. Edelstahl. Vorzugsweise werden jedoch beide Elektroden von Diamantelektroden gebildet. In diesem Falle kann das Gerät so ausgestaltet werden, dass eine Spannung mit wechselndem Vorzeichen über den beiden Elektroden angelegt wird, wodurch Ablagerungen an den Elektroden vermieden werden können.

Weiter ist das Gerät mit einem Redox-Detektor 11 ausgestattet, welcher es erlaubt, das Redox-Potenzial des Prozesswassers in der Tank-Zirkulationsleitung 7 oder im Tank 2 zu messen. Detektoren dieser Art sind dem Fachmann bekannt.

Als weiterer Sensor ist ein Qualitätssensor 12 vorgesehen, um die Qualität des Prozesswassers im Tank 2 zu messen. Dabei handelt es sich um einen Gassensor, der in einem oberen, bei Maximalstand des Prozesswassers nicht mit Prozesswasser gefüllten Teil des Tanks 2 angeordnet ist oder mit diesem oberen Teil des Tanks 2 z.B. über eine Verbindungsleitung in Verbindung steht. Der Gassensor ist in der Lage, aus dem Wasser austretende Gase zu detektieren, die auf einen Bakterienstoffwechsel, insbesondere einen anaeroben Bakterienstoffwechsel, hinweisen, wie z.B. Methan, aber auch andere organische Gase oder Ammoniak oder Schwefelwasserstoff. Auch Sensoren dieser Art sind dem Fachmann bekannt. Beispielsweise können die Sensoren TGS 2602 oder TGS 842 der Firma Figaro USA Inc., Arlington Heights, eingesetzt werden.

Die Funktion des Geräts nach Fig. 1 wird nun im Detail beschrieben.

Zu Beginn einer Vor- oder Hauptwaschphase prüft die Steuerung 3, ob sich Prozesswasser aus einem vorherigen Waschgang im Tank 2 befindet und (optional) ob dessen Qualität ausreichend ist. Die Qualität kann hierzu mit dem Qualitätssensor 12 gemessen werden, oder z.B. auch aus der Lagerzeit des Wassers im Tank abgeleitet, d.h. verworfen, werden. Auch die Zerfallsgeschwindigkeit des Redox-Potentials nach einer Wasserbehandlung kann, wie weiter unten näher beschrieben, als Mass für die Wasserqualität verwendet werden.

Ist die Qualität des Prozesswassers im Tank 2 ausreichend, so wird es während der Vor- oder Hauptwaschphase über Ventil 10 in den Bottich 1 geführt, wo es allenfalls mit Frischwasser ergänzt wird. Ansonsten wird während der Vor- und Hauptwaschphase jeweils Frischwasser verwendet.

Während der Vor- und Hauptwaschphase kann das Prozesswasser im Bottich 1 in der Bottich-Zirkulationsleitung 4 umgepumpt werden, wobei die Wasserweiche 6 so eingestellt ist, dass das Prozesswasser jeweils zurück in den Bottich 1 und nicht in den Tank 2 geführt wird. Am Schluss der jeweiligen Phase wird das Prozesswasser über eine nicht gezeigte Abwasserleitung aus dem Gerät geführt.

Zu Beginn der Spühlphase wird dem Bottich 1 Frischwasser zuführt und das Gut wird gespült. Wiederum kann das Prozesswasser dabei in der Bottich-Zirkulationsleitung 4 umgepumpt werden, wobei die Wasserweiche 6 wiederum so eingestellt ist, dass das Prozesswasser jeweils zurück in den Bottich 1 und nicht in den Tank 2 geführt wird.

Am Schluss der Spühlphase wird die Wasserweiche 6 umgestellt und das Prozesswasser wird in den Tank 2 gefördert. Im Tank 2 kann es für den nächsten Waschgang gelagert werden.

Vor der Lagerung des Prozesswassers im Tank 2 wird das Prozesswasser durch die Wasserbehandlungsvorrichtung 9 geführt, und auch während der Lagerung kann das Prozesswasser vom Tank 2 über die Pumpe 8 durch die Wasserbehandlungsvorrichtung 9 geführt werden. Um das Wasser dabei zu behandeln, wird an die Elektrolysezelle eine Spannung angelegt, so dass, wie bereits erwähnt, hochaktive Moleküle und insbesondere Radikale entstehen, welche Keime abtöten und organische Verschmutzungen abbauen können.

Um Strom zu sparen, wird die Wasserbehandlungsvorrichtung während der Lagerung des Prozesswassers nur intervallweise betrieben, wobei die Steuerung 3 den Zeitpunkt eines Behandlungsintervalls festlegt. Dies kann beispielsweise rein zeitgesteuert erfolgen, d.h. die Steuerung ist dazu ausgestaltet, das im Tank 2 gelagerte Prozesswasser nach Ablauf einer gewissen Zeit mit der Wasserbehandlungsvorrichtung zu behandeln, z.B. einmal pro Tag. Alternativ oder zusätzlich hierzu kann die Steuerung das Signal des Qualitätssensors 12 verwenden, um die Wasserbehandlung bei Detektion einer gewissen Verschmutzung einzuleiten.

Die Dauer einer Behandlung ist abhängig von der zu behandelnden Wassermenge, des durch die Wasserbehandlungsvorrichtung 9 fliessenden Stroms sowie die Intervalldauer zwischen zwei Behandlungen. Eine typische Behandlungsdauer liegt bei ca. 10 - 40 Minuten bei einem Tankvolumen von ca. 4 - 10 Litern, einem Intervallabstand von 24 Stunden und einem Strom von ca. 1 A. Es zeigt sich, dass auf diese Weise eine Geruchsbildung im Prozesswasser über Wochen vermieden werden kann.

Der Strom durch die Elektrolysezelle hängt von der angelegten Spannung und der Zusammensetzung des Prozesswassers ab. Vorzugsweise ist deshalb ein Regelkreis vorgesehen, um dem Strom durch die Elektrolysezelle durch Variieren der Spannung über der Elektrolysezelle zu regeln. Um die Erzeugung von Wasserstoff zu vermeiden, wird die Spannung dabei jedoch auf 50 Volt limitiert.

Der Redox-Detektor 11 kann dazu verwendet werden, die Funktion der Wasserbehandlungsvorrichtung 9 zu überwachen und/oder die Dauer einer Behandlung und den Abstand zwischen aufeinander folgenden Behandlungen zu optimieren, indem die Wasserbehandlungsvorrichtung abhängig vom Signal des Redox-Detektors 11 gesteuert wird:
- Insbesondere kann die Steuerung 3 dazu ausgestaltet sein, die Behandlung des Prozesswassers mit der Wasserbehandlungsvorrichtung 9 nach Erreichen eines gegebenen Redox-Potentials zu beenden, da dies anzeigt, dass im Prozesswasser nun ausrechend Radikale vorhanden sind.
- Zusätzlich oder alternativ hierzu kann die Steuerung 3 dazu ausgestaltet sein, die Zerfallsgeschwindigkeit des Redox-Potenzials nach Deaktivierung der Wasserbehandlungsvorrichtung 9 (d.h. nach einer Behandlung) zu bestimmen. Diese Zerfallsgeschwindigkeit (z.B. ausgedrückt durch die Zeit, innerhalb der das Redox-Potenzial um 50% abfällt) ist abhängig vom Verschmutzungsgrad des Prozesswassers. In einigermassen sauberem Wasser beträgt die Halbwertszeit z.B. ca. 30 Minuten, während in stark verschmutztem Wasser diese Zeit auf z.B. 10 Minuten absinkt. Indem die Steuerung 3 nun dazu ausgestaltet ist, die nächste Aktivierungszeit (d.h. den Startzeitpunkt der nächsten Behandlung) abhängig von der Zerfallsgeschwindigkeit festzulegen, kann einer besonders hohen Verschmutzung durch kürzere Abstände zwischen aufeinander folgenden Behandlungen Rechnung getragen werden. Vorzugsweise wird also bei einer höheren Zerfallsgeschwindigkeit ein kürzerer zeitlicher Abstand bis zur nächsten Behandlung des Prozesswassers mit der Wasserbehandlungsvorrichtung 9 gewählt.

Fig. 2 zeigt eine zweite Ausführung eines Haushaltsgeräts. Es unterscheidet sich von jener gemäss Fig. 1 dadurch, dass am Tank 2 kein Zirkulationskreislauf vorgesehen ist, was das Gerät apparativ vereinfacht. Die Wasserbehandlungsvorrichtung 9 ist in diesem Fall an der Bottich-Zirkulationsleitung 4 angeordnet.

In dieser Ausführung wird das Prozesswasser vor der Lagerung im Tank 2 mit der Wasserbehandlungsvorrichtung 9 behandelt. Hierzu wird das Wasser während einer gewissen Behandlungsdauer in der Tank-Zirkulationsleitung 4 umgepumpt und die Wasserbehandlungsvorrichtung 9 dabei aktiviert, so dass Keime abgetötet werden. Dies geschieht vorzugsweise am Schluss der Spühlphase. Dann wird das Prozesswasser über die Wasserweiche 6 in den Tank 2 übergeführt.

Bei dieser Ausführung kann das Wasser während seiner Lagerung nicht mehr behandelt werden, es sei denn, es werde zurück in den Bottich 1 und die Bottich-Zirkulationsleitung 4 gefördert, was jedoch für viele Anwendungen nicht günstig ist. Mit der Behandlung des Prozesswassers vor der Lagerung kann die Lagerzeit jedoch bereits stark erhöht werden. Versuche zeigen, dass sich die maximale Lagerdauer von durchschnittlich verschmutztem Prozesswasser von maximal 1.5 Tage auf rund 3 Tage erhöht.

In der Ausführung nach Fig. 2 kann die Steuerung 3 dazu ausgestaltet sein, das Prozesswasser auch während eines Reinigungsgangs, insbesondere während der Hauptwaschphase, mit der Wasserbehandlungsvorrichtung 9 zu behandeln, wodurch der Reinigungsprozess aufgrund der entstehenden Radikale verbessert wird. (Bei der Ausführung nach Fig. 1 ist dies ebenfalls möglich, falls z.B. geeignete Umschaltventile vorgesehen werden, um die Wasserbehandlungsvorrichtung 9 wahlweise auch in die Bottich-Zirkulationsleitung einzufügen.)

In beiden der beschriebenen Ausführungsformen kann auch ein Filter vorgesehen sein, z.B. mit einer Maschenweite von 0.5 mm, um das Wasser vor dem Zuführen in den Tank 2 zu filtern und so eine Verschmutzung des Tanks 2 zu reduzieren.

Die Verwendung der Wasserbehandlung erlaubt es, eine Geruchsbildung im gelagerten Wasser über mehrere Tage zu vermeiden. Zudem können pathogene Keime abgetötet werden.

Zur Illustration der Funktion des Gassensors wird in Fig. 3 ein typisches Resultat einer Testmessung gezeigt. Im Rahmen dieser Messung wurde ein Tank mit Wasser gefüllt (mit typischer Verschmutzung des Klarspülwassers eines Geschirrspülers). Ein Methansensor wurde in Kontakt mit dem Tankraum oberhalb des Wasserpegels angeordnet. Zu Beginn betrug das Signal des Methansensors 2.8 V. Ab ca. 40 Stunden stieg das Signal an, und gleichzeitig wurde eine erhebliche Aktivität der Mikroorganismen beobachtet, bis zu einem Signalmaximum von 8.8 V. Dabei erzeugte das Wasser einen erheblichen Geruch. Nach Ablassen des Wassers fiel das Signal wieder auf 3.4 V.

Nebst oder anstelle einer Elektrolysezelle mit Diamantelektrode kann die Wasserbehandlungsvorrichtung 9 noch weitere bzw. andere Teile aufweisen, insbesondere:
- Eine UV-Lichtquelle zur Behandlung des Prozesswassers kann ebenfalls dazu verwendet werden, Gerüche zu vermeiden und Keime abzutöten.
- Ein Ozongenerator kann ebenfalls dazu verwendet werden, Gerüche zu vermeiden und Keime abzutöten. Dem Ozongenerator wird Luft zugeführt, der diese in Ozon umwandelt und das Ozon in das Prozesswasser bläst.
- Ein Bioreaktor kann dazu verwendet werden, organische Substanzen abzubauen. Um einen aeroben Abbau sicherzustellen, wird dem Bioreaktor Luft zugeführt. Der aerobe Abbau führt im Vergleich zu einem anaeroben Abbau zu keinen Geruchsbelästigungen. Im Bioreaktor sind zur Oberflächenvergrösserung Kleinteile eingebracht, an denen die Mirkoorganismen kultiviert werden können.
- Eine Heizung, mit welcher das Prozesswasser zum Entkeimen erhitzt werden kann.

Grundsätzlich ist frei wählbar, welches Prozesswasser dem Tank 2 zugeführt wird. Vorzugsweise handelt es sich, wie erwähnt, um das letzte Spülwasser. Bei geringen Badmengen bzw. grossem Tank kann auch z.B. ein Teil des vorletzten Spülwassers eingeleitet werden, eventuell zeitlich gesteuert.

Die Steuerung 20 bietet dem Benutzer die Möglichkeit, z.B. über die Anwahl eines oder mehrerer bestimmter Programme, die Verwendung des Tanks 2 ein- oder auszuschalten. Insbesondere kann er die Verwendung des Tanks 2 so auch deaktivieren.

Das Gerät kann, wie bereits erwähnt, mit einem Verschmutzungssensor 15, insbesondere einem optischen Trübungssensor, ausgestattet sein, und die Steuerung kann abhängig vom Signal des Trübungssensors 15 die Zwischenlagerung von Prozesswasser im Tank 2 unterdrücken. Auf diese Weise kann verhindert werden, dass stark verschmutztes Wasser zwischengelagert wird. Die Verschmutzungsschwelle, ab welcher eine Zwischenlagerung unterdrückt wird, kann vom Programm abhängen, das der Benutzer anwählt, und z.B. bei einem besonders ökologischen Programm höher liegen als bei anderen Programmen.

Während dem Lagern des Prozesswassers im Tank 2 kann dieses unter gewissen Bedingungen von der Steuerung 3 abgelassen werden, so z.B. in den folgenden Fällen:
- Nach einem Netzunterbruch.
- Wenn die Lagerdauer eine Schwelle überschreitet (z.B. drei Tage).
- Bei expliziter Instruktion durch den Benutzer. Hierzu kann der Benutzer der Steuerung 3 mitteilen, dass sie den Tank 2 leeren soll, z.B. wenn er eine längere Abwesenheit plant.
- Wenn der Qualitätssensor 12 eine starke Gasentwicklung feststellt.

Der Tank 2 kann zur Reinigung und Hygienisierung regelmässig oder auf Befehl des Benutzers oder bei Detektion einer starken Gasentwicklung mittels des Gassensors 12 mit heissem Wasser geflutet werden. Eine automatische Flutung kann z.B. nach 15 Tankfüllungen in der nächsten Hauptwaschphase eingeleitet werden. Bei einem Geschirrspüler kann hierzu das Wasser des letzten Bades z.B. auf 72 °C aufgeheizt und durch den Tank geleitet werden. Dabei wird die Temperatur weiterhin auf ca. 70°C gehalten, bis zum Ablauf von z.B. 10 Minuten.

Durch Zugabe von Reinigungsmittel oder Chlortabletten kann die Hygienewirkung unterstützt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltsgerät umfassend
einen Bottich (1) zur Reinigung eines zu reinigenden Guts,
einen Tank (2) zum Zwischenspeichern von aus dem Bottich (1) abgelassenem Prozesswasser,
eine Steuerung (3), welche dazu ausgestaltet ist, Prozesswasser vom Bottich (1) in den Tank (2) zu fördern und in einem späteren Reinigungsgang mit neuem Gut das Prozesswasser vom Tank (2) zurück zu Bottich (1) zu befördern,
**gekennzeichnet durch** einen Gassensor (12) zum Detektieren von aus dem im Tank (2) gelagerten Prozesswasser austretenden Gasen.

2. Haushaltgerät nach Anspruch 1, wobei mit dem Gassensor Ammoniak detektierbar ist.

3. Haushaltgerät nach einem der vorangehenden Ansprüche, wobei mit dem Gassensor mindestens ein organisches Gas, insbesondere Methan, detektierbar ist.

4. Haushaltgerät nach einem der vorangehenden Ansprüche, wobei mit dem Gassensor Schwefelwasserstoff detektierbar ist.

5. Haushaltgerät nach einem der vorangehenden Ansprüche mit einer Wasserbehandlungsvorrichtung (9) zum Abbau von Keimen im Prozesswassers im Tank (2), wobei die Steuerung dazu ausgestaltet ist, die Wasserbehandlungsvorrichtung (9) abhängig von einem Signal des Gassensors (12) anzusteuern.

6. Haushaltgerät nach Anspruch 5, wobei die Wasserbehandlungsvorrichtung (9) aufweist:
- eine Elektrolysezelle mit mindestens einer Diamantelektrode und/oder
- eine UV-Lichtquelle und/oder
- einen Ozongenerator und/oder
- einen Bioreaktor zum Abbau organischer Substanzen, und/oder
- eine Heizung.

7. Haushaltgerät nach einem der vorangehenden Ansprüche, wobei die Steuerung dazu ausgestaltet ist, das Prozesswasser im Tank (2) abhängig von einem Signal des Gassensors (12) zu verwerfen.

8. Haushaltgerät nach einem der vorangehenden Ansprüche, wobei der Gassensor (12) in einem oberen, nicht mit Prozesswasser gefüllten Teil des Tanks (2) angeordnet ist oder mit diesem oberen Teil in Verbindung steht.

9. Haushaltsgerät nach einem der vorangehenden Ansprüche, wobei das Haushaltsgerät ein Geschirrspüler ist.

10. Haushaltsgerät nach einem der Ansprüche 1 bis 8, wobei das Haushaltsgerät eine Waschmaschine ist.

## Claims

1. An appliance comprising
a tub (1) for cleaning of items to be cleaned,
a reservoir (2) for the intermediate storage of process water drained from the tub (1),
a control unit (3) configured to transfer process water from the tub (1) to the reservoir (2) and during a later wash cycle with new items to be cleaned back from the reservoir (2) into the tub (1),
**characterized by** a gas sensor (12) for detecting gas escaping the process water stored in the reservoir (2).

2. The appliance of claim 1, wherein ammonia can be detected by the gas sensor.

3. The appliance of any of the preceding claims, wherein at least one organic gas, particularly methane, can be detected by the gas sensor.

4. The appliance of any of the preceding claims, wherein hydrogen sulphide can be detected by the gas sensor.

5. The appliance of any of the preceding claims with a water treatment device (9) for degrading germs in the process water in the reservoir (2), wherein the control unit is configured to operate the water treatment device dependent on a signal of the gas sensor (12) .

6. The appliance of claim 5, wherein the water treatment device (9) comprises:
- an electrolytic cell with at least one diamond electrode and/or
- a UV light source and/or
- an ozone generator and/or
- a bio reactor for degrading organic substances, and/or
- a heater.

7. The appliance of any of the preceding claims, wherein the control unit is configured to reject the process water in the reservoir (2) dependent on a signal of the gas sensor (12).

8. The appliance of any of the preceding claims, wherein the gas sensor (12) is arranged in an upper part of the reservoir (2) not filled with process water or is in fluid communication with this upper part of the reservoir.

9. The appliance of any of the preceding claims, wherein the appliance is a dishwasher.

10. The appliance of any of the preceding claims, wherein the appliance is a washing machine.

## Revendications

1. Appareil domestique comprenant
une cuve (1) pour nettoyer un bien à nettoyer,
un réservoir (2) pour stocker temporairement de l'eau de processus déchargée de la cuve (1),
une commande (3) étant adaptée à transporter de l'eau de processus de la cuve (1) dans le réservoir (2) et à transporter l'eau de processus du réservoir (2) dans la cuve (1) dans une étape de nettoyage ultérieure avec un nouveau bien,
**caractérisé par** un capteur de gaz (12) pour détecter du gaz s'échappant de l'eau de processus présente dans le réservoir (2).

2. Appareil domestique selon la revendication 1, de l'ammoniac pouvant être détecté par le capteur de gaz.

3. Appareil domestique selon l'une des revendications précédentes, au moins un gaz organique, particulièrement du méthane, pouvant être détecté par le capteur de gaz.

4. Appareil domestique selon l'une des revendications précédentes, de l'hydrogène sulfuré pouvant être détecté par le capteur de gaz.

5. Appareil domestique selon l'une des revendications précédentes, avec un dispositif de traitement d'eau (9) pour une dégradation de germes dans l'eau de processus dans le réservoir (2), la commande étant adaptée à commander le dispositif de traitement d'eau (9) dépendant d'un signal du capteur de gaz (12).

6. Appareil domestique selon la revendication 5, le dispositif de traitement d'eau (9) ayant :
- une cellule d'électrolyse avec au moins une électrode de diamant et/ou
- une source de lumière ultraviolette et/ou
- un générateur d'ozone et/ou
- un réacteur biologique pour dégrader des substances organiques, et/ou
- un chauffage.

7. Appareil domestique selon l'une des revendications précédentes, la commande étant adaptée à décharger l'eau dans le réservoir (2) dépendant d'un signal du capteur de gaz (12).

8. Appareil domestique selon l'une des revendications précédentes, le capteur de gaz (12) étant arrangé dans une partie supérieure du réservoir (2) qui ne contient pas de l'eau de processus ou étant connecté avec ladite partie supérieure.

9. Appareil domestique selon l'une des revendications précédentes, l'appareil domestique étant un lave-vaisselle.

10. Appareil domestique selon l'une des revendications 1 à 8, l'appareil domestique étant une machine à laver.
